# EUROPEAN PATENT SPECIFICATION

(11) **EP 1 669 274 B1**
(45) Date of publication and mention of the grant of the patent: **13.11.2013**
(21) Application number: 04773661.6
(22) Date of filing: 30.09.2004
(51) Int. Cl.: B62D 5/04, F16H 7/18

(54) **SPEED REDUCTION GEAR OF ELECTRIC POWER STEERING DEVICE**
UNTERSETZUNGSGETRIEBE FÜR ELEKTRISCHE SERVOLENKVORRICHTUNG
DEMULTIPLICATEUR DE DISPOSITIF DE DIRECTION ASSISTEE

(30) Priority: 01.10.2003 JP 2003342774
(43) Date of publication of application: 14.06.2006
(73) Proprietor: NSK Ltd., Tokyo 141-8560 (JP); NSK Steering Systems Co., Ltd., Shinagawa-ku, Tokyo 141-8560 (JP)
(72) Inventor: Ueno, Seiji, c/o NSK Steering Systems Co., Ltd., Maebashi-shi, Gunma 371-8528 (JP); Chikaraishi, K., c/o NSK Steering Systems Co., Ltd, Maebashi-shi, Gunma 371-8528 (JP)
(74) Representative: HOFFMANN EITLE
(86) International application number: PCT/JP2004/014800
(87) International publication number: WO 2005/032913

(56) References cited:
- EP-A1- 1 457 405
- WO-A1-2004/020868
- DE-U1- 20 300 674
- GB-A- 2 202 501
- JP-A- 9 004 686
- JP-A- 60 057 041
- JP-A- 2003 237 599
- JP-U- 62 145 777

## Description

### TECHNICAL FIELD

This invention relates to an electric power steering device and particularly to the electric power steering device including a speed reduction gear using a toothed belt.

### BACKGROUND ART

In an electric power steering device adapted to generate auxiliary torque by an electric motor, the magnitude of steering torque generated on a steering shaft is detected, and the electric motor is driven by a control device for controlling a motor current depending on the detected steering torque to supply the auxiliary torque to the steering shaft.

The device is, for example, so constructed that a pinion connected to the steering shaft meshes with a rack shaft supported to displace in the axial direction, thereby converting the rotation of the steering shaft to the axial movement of the rack shaft to operate the direction of a steered wheel through a wheel steering mechanism, and in the mechanism, a ball screw mechanism is disposed between the electric motor and the rack shaft.

The ball screw mechanism is composed of a helical groove formed on the outer peripheral surface of the rack shaft, a nut member fitted to the outer periphery of the helical groove and provided with a helical groove formed on the inner peripheral surface, and a number of balls disposed between the two helical grooves. The electric motor is coupled to the nut member through a speed reduction gear, wherein the rotation of the electric motor rotates the nut member of the ball screw mechanism through the speed reduction gear to thereby move the rack shaft in the axial direction, thereby turning the steered wheel through the wheel steering mechanism.

In this type of electric power steering device, when the rack shaft is displaced from the neutral position in the axial direction by the operation of the steering wheel, the axial load and the load in the shearing direction (in the radial direction) are transmitted to the rack shaft so that bending moment is generated in the rack shaft by the load in the shearing direction to affect the ball screw mechanism.

That is, since the ball screw mechanism has very low acceptable capacity to the load in the shearing direction and high acceptable capacity to the axial load, when the bending moment is applied to the rack shaft to be deformed, the pitch of the helical groove formed on the rack shaft changes, and when the meshing accuracy of the rack shaft and the pinion is low, the rack shaft is vibrated in the radial direction with the rotation of the pinion. This results in that when excessive load is applied to the balls of the ball screw mechanism to disable the balls from smoothly rotating, the transmission efficiency of turning torque from the electric motor is lowered, and also the durability is lowered to inhibit the improvement in steering feeling.

As a measure against this, the constitution has been proposed in Japanese Utility Model Publication (B) No. H6-49489 (49489/1994), in which a toothed pulley is coaxially disposed on a rack shaft provided with a helical groove of a ball screw mechanism, the toothed pulley is coupled to a nut of the above ball screw mechanism to be integrally rotated and be displaced in the radial direction, and on the other hand, another toothed pulley is mounted on an electric motor, and a toothed belt is wrapped between the toothed pulley coaxially disposed on the rack shaft and the toothed pulley mounted on the electric motor to thereby transmit the turning force of the electric motor through a speed reducing mechanism and the ball screw mechanism to the rack shaft.

In the above constitution, excessive load is not applied to the ball screw mechanism so that the ball screw mechanism is smoothly rotated not to lower the transmission efficiency of turning torque from the electric motor and also the disadvantages such as lowering of durability and inhibition of the improvement in steering feeling can be nearly overcome.

On the other hand, in the electric power steering device including this type of speed reduction gear using the toothed belt, it is expected that a long-time use or application of excessive load will cause breakage of the toothed belt. When the toothed belt is broken, the turning force of the electric motor is not transmitted to the rack shaft to enter the manual steering state. Even in this case, steering for emergency refuge can be performed, so it has been considered that the steering mechanism is probably provided with a failsafe function.

However, when the broken toothed belt slips out of the toothed pulley to be caught in a space up to a housing, the speed reduction gear is locked. Especially, when the broken toothed belt is caught between the toothed pulley on the driven side, that is, on the rack shaft side and the housing so that the toothed pulley on the driven side is locked, the steering shaft is locked and disabled from steering to cause a very dangerous condition where the failsafe function of the steering mechanism will not work because the toothed pulley on the driven side and the rack shaft interlock with each other through the ball screw mechanism.

The invention has been made in view of the above problems.

DE 20300674 U1 discloses a power steering drive for a steering mechanism in which a belt housing surrounds a toothed belt mounted to a small belt pulley and a large belt pulley. A similar arrangement in an electric power steering system for vehicles is disclosed in each of GB 2 202 501 A, EP 1 457 405 A1 and WO 2004/020868 A1. However, none of these documents mentions the clearance between the belts and the housing inner walls.

In one aspect, the invention provides an electric power steering device, comprising: a speed reduction gear having a drive side toothed pulley mounted on a motor shaft; a driven side toothed pulley mounted on a rotary member on the steering mechanism side; and a toothed belt wrapped around both toothed pulleys, characterized by: a first housing on which a motor flange is mounted; and a second housing in which at least the clearance gap between an inner peripheral surface of the second housing opposite to the toothed belt wrapped around the driven side toothed pulley and the back face side of the toothed belt wrapped around the driven side toothed pulley is set equal to or larger than the tooth depth of the toothed belt.

In another aspect, the invention provides a procedure for assembling an electric power steering device according to the first-mentioned aspect, which procedure comprises a step of mounting the second housing on the first housing after the toothed belt has been wrapped around both toothed pulleys.

Embodiments of the invention provide an electric power steering device including a speed reduction gear using a toothed belt, in which the speed reduction gear is so constructed that at least a clearance gap Δ between the inner peripheral surface of a housing of a driven side rotary member opposite the toothed belt and the back face side of the toothed belt wrapped round a toothed pulley is larger that the tooth depth H of the toothed belt (Δ>H), whereby even if the toothed belt is broken, the toothed belt is not gripped between the inside surface of the housing and the outer peripheral surface of the toothed pulley to lock the toothed belt and there is no fear of causing disability of steering.

### BRIEF DESCRIPTION OF DRAWINGS

To enable a better understanding of the present invention, and to show how the same may be carried into effect, reference will now be made, by way of example only, to the accompanying drawings, in which:-
FIG. 1 is a cross section for explaining the constitution of the principal part of a rack shaft assembly provided with a belt speed reduction gear in an electric power steering device.
FIG. 2 is a front section for explaining the principal part of the conventional speed reduction gear using a toothed belt.
FIG. 3 is a front section for explaining the condition where the toothed belt is broken in the conventional speed reduction gear using the toothed belt shown in FIG. 2.
FIG. 4 is a front section for explaining a speed reduction gear using a toothed belt according to an embodiment of the invention.
FIG. 5 is a front section for explaining the condition where the toothed belt is broken in the speed reduction gear using the toothed belt according to the embodiment shown in FIG. 4.
FIG. 6 is a diagram for explaining the relationship between the clearance gap Δ between the inside surface of a housing A and the outer peripheral surface of a toothed pulley B and the tooth depth H of a toothed belt C.
FIG. 7 is a diagram for explaining the condition where the clearance gap Δ between the inside surface of the housing A and the outer peripheral surface of the toothed pulley B is set smaller than the tooth depth H of the toothed belt C (Δ<H) and the toothed belt C is caught there.
FIG. 8 is a diagram for explaining the constitution in which the clearance gap Δ between the inside surface of the housing A and the outer peripheral surface of the toothed pulley B is set larger than the tooth depth H of the toothed belt C (Δ >H).

### DETAILED DESCRIPTION

An embodiment of the invention will now be described.

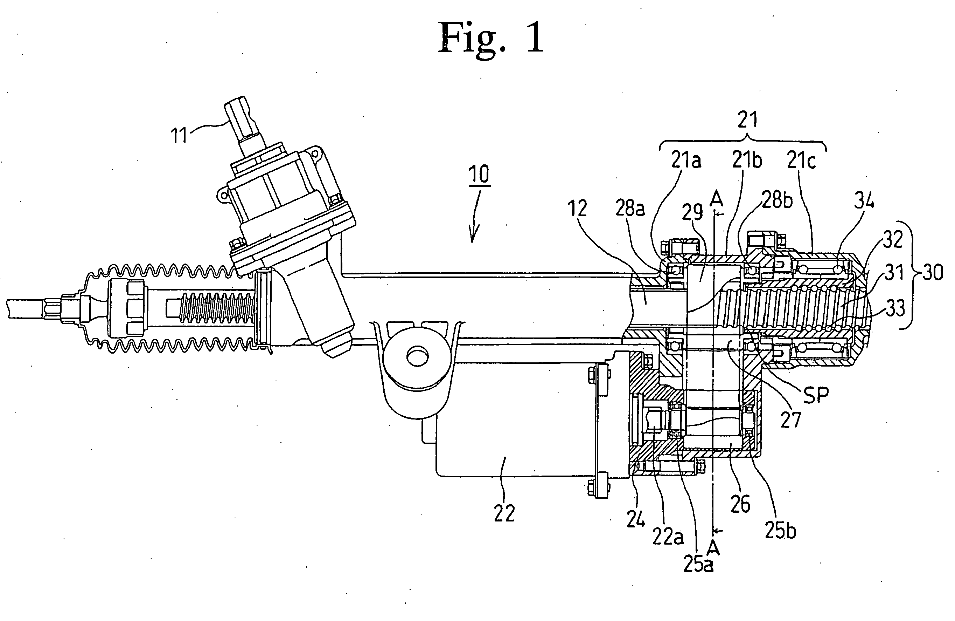

FIG. 1 is a cross section for explaining the constitution of the principal part of a rack shaft assembly 10 including a belt speed reduction gear of an electric power steering device according to an embodiment of the invention.

The underlying objective of embodiments of the invention is explained on page 4 above. Steering systems according to embodiments of the invention are safe because the driven side pulley of the system is rotatable even when the belt is cut. The steering shaft will remain operable provided that the gap at all points between the driven side pulley and the housing of the system is larger than the tooth height of the belt because the driven side pulley remains rotatable. This is why the phrase "at least the clearance gap" should be interpreted as the minimum gap of the driven side.

In FIG. 1, the reference numeral 11 is a steering shaft, 12 is a rack shaft, a pinion not shown, which is mounted at the end part of the steering shaft 11, and the rack shaft 12 mesh with each other to transmit the rotation of the steering shaft 11 to the rack shaft 12.

A rack shaft housing 21 is composed of a first housing 21a on which a motor flange 24 is mounted, a second housing 21b storing first and second toothed pulleys mentioned later, and a third housing 21c storing a ball screw mechanism also mentioned later.

A motor 22 includes a stator and a rotor in the interior not shown, a rotating shaft 22a extended from the rotor is rotatably supported by bearings 25a and 25b disposed in the motor flange 24, and a first toothed pulley 26 is fitted to the rotating shaft 22a.

A second toothed pulley 27, which is a driven side pulley, is cylindrical, the rack shaft 12 is passed through the interior thereof, and the second toothed pulley 27 is rotatably supported at both end parts in the axial direction of the cylinder by a bearing 28a disposed in the first housing 21a and a bearing 28b disposed in the second housing 21b.

A spline groove is formed on the inner peripheral surface of the second toothed pulley 27, and the spline groove and a spline projection formed on a nut 32 of the ball screw mechanism mentioned later are spline-coupled SP to be movable in the axial direction and relatively unrotatable in the rotating direction.

The ball screw mechanism 30 is composed of a helical groove 31 formed on the rack shaft 12, the nut 32 and a number of balls 33 disposed between the helical groove 31 and the nut 32, and the nut 32 is rotatably held by a bearing 34 disposed in the third housing 21c.

The assembling procedure of the rack shaft assembly including the above belt speed reduction gear will be described simply. The bearings 25a and 25b are disposed in the motor housing 24, the first toothed pulley 26 is fitted to the motor rotating shaft 22a supported by the bearings 25a and 25b, and in this state, the motor housing 24 is mounted on the first housing 21a. The bearing 28a is disposed in the first housing 21a, thereby rotatably supporting the second toothed pulley 27, and a toothed belt 29 is wrapped between the first toothed pulley 26 and the second toothed pulley 27.

The second housing 21b where the bearing 28a is mounted is mounted on the first housing 21a, and the other end of the second toothed pulley 27 supported by the bearing 28a is rotatably supported by the bearing 28b.

Further, the third housing 21c where the ball screw mechanism 30 is assembled is fitted to the second housing 21b, the rack shaft 12 is passed through the second toothed pulley 27, and the spline groove of the inside surface of the second toothed pulley 27 and the spline projection of the nut 32 of the ball screw mechanism 30 are spline-coupled SP to complete the rack shaft assembly 10 including a belt speed reduction gear.

In the above rack shaft assembly 10, the first toothed pulley 26, the second toothed pulley 27 and the toothed belt 29 constitute a belt speed reduction gear 40.

On the basis of the steering torque of the steering shaft detected by a torque sensor not shown, the driving turning force of the motor 22 driven by a control device also not shown is transmitted through the first toothed pulley 26, the toothed belt 29 and the second toothed pulley 27 to the nut 32 of the ball screw mechanism 30. By the rotation of the nut 32, the rack shaft 12 is moved in the axial direction to turn the wheels so that steering is performed.

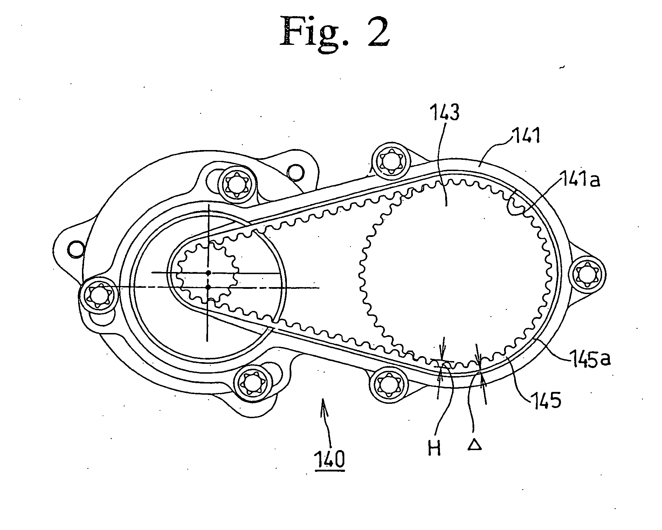

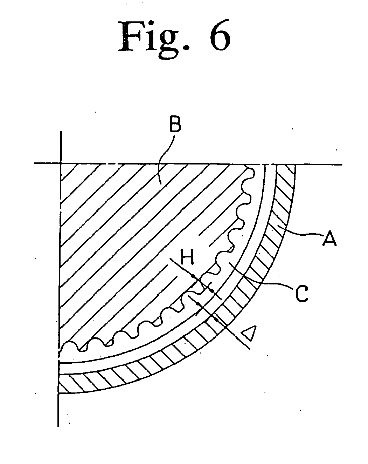

The relationship between the toothed belt and the housing will now be described. FIG. 2 is a front view showing the constitution of a speed reduction gear 140 using the conventional toothed belt, in which although the relationship between the clearance gap Δ between an inside surface 141a of a housing 141 of the speed reduction gear 140 and a back face side 145a of a toothed belt 145 wrapped round a toothed pulley 143 and the tooth depth H of the toothed belt 145 will be described later with reference to Fig. 6, the above clearance gap Δ is set smaller than the tooth depth H of the toothed belt 145 (Δ<H) .

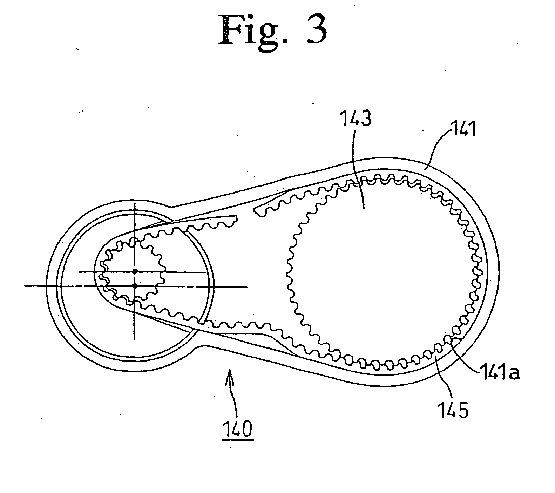

Consequently, when the toothed belt 145 is broken, as shown in FIG. 3, the toothed belt 145 is gripped between the inside surface 141a of the housing 141 and the outer peripheral surface of the toothed pulley 143 so that the toothed pulley 143 is locked.

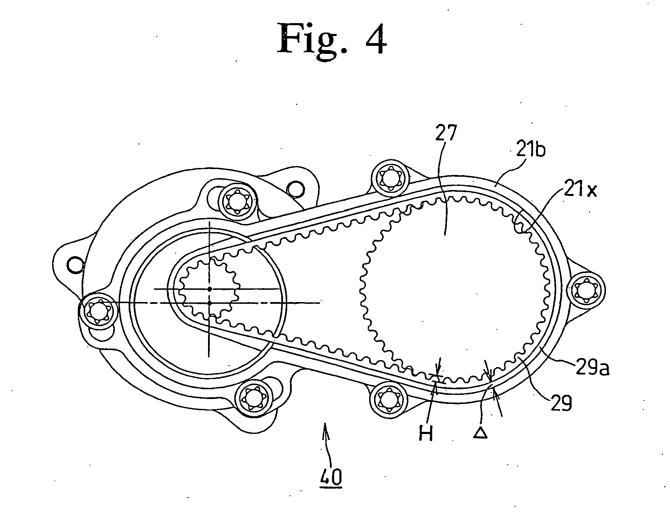

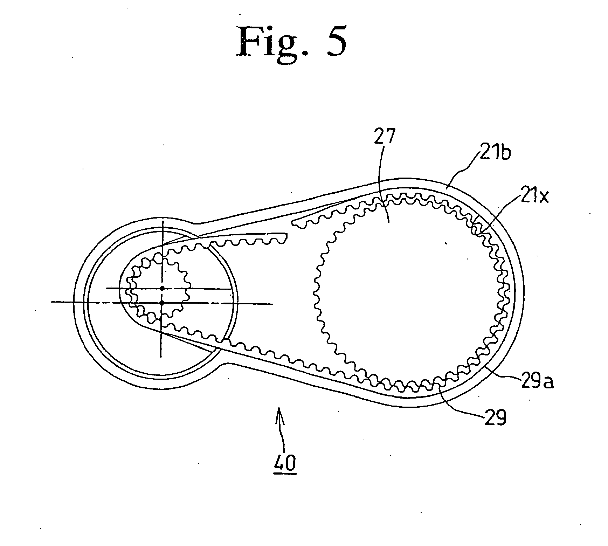

FIG. 4 is a front section showing the constitution of the speed reduction gear 40 part, which shows a section taken along a line A - A of FIG. 1. The clearance gap Δ between the inside surface 21X of the second housing 21b of the speed reduction gear 40 and the back face 29a of the toothed belt 29 wrapped round the toothed pulley 27 is larger than the tooth depth H of the toothed belt 29 (Δ>H). Accordingly, when the toothed belt 29 is broken, as shown in FIG. 5, the toothed belt 29 is not gripped between the inside surface 21X of the second housing 21b and the outer peripheral surface of the second toothed pulley 27 to prevent the toothed pulley 27 from being locked.

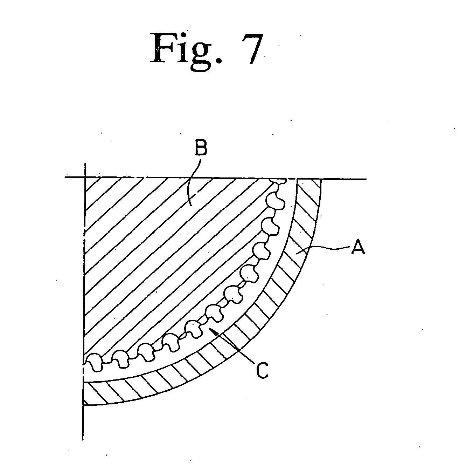

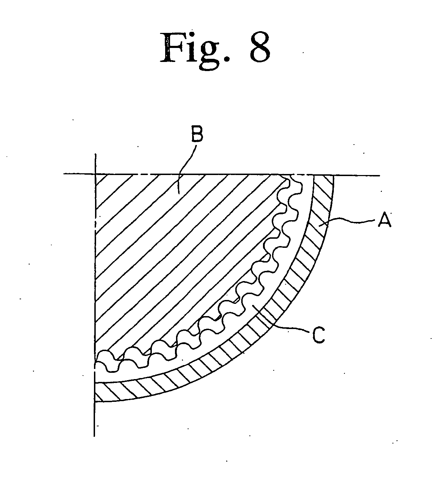

FIGS. 6 to 8 are diagrams for explaining the relationship between the clearance gap Δ between the inside surface of the housing A and the back face of the toothed belt C wrapped round the toothed pulley B and the tooth depth H of the toothed belt C, and the gripping of the toothed belt C, FIG. 6 is a diagram for explaining the relationship between the clearance gap between the inside surface of the housing A and the back face of the toothed belt C wrapped round the toothed pulley B and the tooth depth H of the toothed belt C, FIG. 7 shows the condition where the clearance gap Δ is smaller than the tooth depth H (Δ<H) and the toothed belt C is gripped there, and FIG. 8 shows the condition where the clearance gap Δ is larger than the tooth depth H (Δ>H) so that the toothed belt C is not gripped.

In the case where the clearance gap Δ is smaller than the tooth depth H (Δ<H), as shown in FIG.7, the toothed belt C is gripped between the inside surface of the housing A and the outer peripheral surface of the toothed pulley B so that the toothed pulley B is locked. On the other hand, in the case where the clearance gap Δ is larger than the tooth depth H (Δ>H), as shown in FIG.8, the toothed belt C is not gripped between the inside surface of the housing A and the outer peripheral surface of the toothed pulley B so that the toothed pulley B is not locked.

This invention may provide an electric power steering device including a speed reduction gear using a toothed belt, in which, since the speed reduction gear is so constructed that at least the clearance gap Δ between the inner peripheral surface of the driven side rotary member opposite to the toothed belt of the housing and the back face side of the toothed belt wrapped round the toothed pulley is larger than the tooth depth H of the toothed belt (Δ>H), even if the toothed belt is broken, the toothed belt is not gripped between the inside surface of the housing and the outer peripheral surface of the toothed pulley so that the toothed pulley is not locked, and there is no fear of disabling steering.

## Claims

1. An electric power steering device, comprising:
a speed reduction gear having a drive side toothed pulley (26) mounted on a motor shaft (22a);
a driven side toothed pulley (27) mounted on a rotary member (12) on the steering mechanism side; and
a toothed belt (29) wrapped around both toothed pulleys, **characterized by**:
a first housing on which a motor flange (24) is mounted; and
a second housing (21b) in which at least the clearance gap (Δ) between an inner peripheral surface of the second housing opposite to the toothed belt wrapped around the driven side toothed pulley and the back face side of the toothed belt wrapped around the driven side toothed pulley is set equal to or larger than the tooth depth (H) of the toothed belt.

2. A procedure for assembling an electric power steering device according to claim 1, which procedure comprises a step of mounting the second housing on the first housing after the toothed belt has been wrapped around both toothed pulleys.

## Patentansprüche

1. Elektrische Servolenkvorrichtung, mit:
einem Untersetzungsgetriebe mit einer antriebsseitigen Zahnriemenscheibe (26), die an einer Motorwelle (22a) angebracht ist;
einer abtriebsseitigen Zahnriemenscheibe (27), die an einem Drehelement (12) auf der Lenkmechanismusseite angebracht ist; und
einem Zahnriemen (29), der um beide Zahnriemenscheiben gewunden ist,
**gekennzeichnet durch**:
ein erstes Gehäuse, an das ein Motorflansch (24) angebracht ist; und
ein zweites Gehäuse (21b), in dem zumindest der Freiraumspalt (Δ) zwischen einer inneren Umfangsfläche des zweiten Gehäuses gegenüber des Zahnriemens, der um die abtriebsseitigen Zahnriemenscheibe gewunden ist, und der Rückflächenseite des Zahnriemens, der um die abtriebsseitige Zahnriemenscheibe gewunden ist, gleich oder größer eingestellt ist als die Zahntiefe (H) des Zahnriemens.

2. Verfahren des Zusammensetzens einer elektrischen Servolenkungvorrichtung nach Anspruch 1, wobei das Verfahren einen Schritt des Anbringens des zweiten Gehäuses an das erste Gehäuse aufweist, nachdem der Zahnriemen um beide Zahnriemenscheiben gewunden wurde.

## Revendications

1. Dispositif de direction assistée électrique, comprenant :
un réducteur de vitesse ayant une poulie synchrone côté entraînement (26) montée sur un arbre de moteur (22a) ;
une poulie synchrone côté entraîné (27) montée sur un élément rotatif (12) du côté mécanisme de direction ; et
une courroie synchrone (29) enroulée autour des deux poulies synchrones,
**caractérisé par** :
un premier logement sur lequel une bride de moteur (24) est montée ; et
un deuxième logement (21b) sur lequel au moins l'espace libre (Δ) entre une surface périphérique intérieure du deuxième logement opposée à la courroie synchrone enroulée autour de la poulie synchrone côté entraîné et le côté face arrière de la courroie synchrone enroulée autour de la poulie synchrone côté entraîné est supérieur ou égal à la profondeur des dents (H) de la courroie synchrone.

2. Procédé d'assemblage d'un dispositif de direction assistée électrique selon la revendication 1, dans lequel le procédé comprend une étape de montage du deuxième logement sur le premier logement après que la courroie synchrone a été enroulée autour des deux poulies synchrones.
